# EUROPEAN PATENT SPECIFICATION

(11) **EP 4 561 224 B1**
(45) Date of publication and mention of the grant of the patent: **28.10.2026**
(21) Application number: 23845246.0
(22) Date of filing: 30.06.2023
(51) Int. Cl.: H04W 72/04

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 28.07.2022 CN 202210898998
(43) Date of publication of application: 28.05.2025
(73) Proprietor: Huawei Technologies Co., Ltd., Shenzhen, Guangdong 518129 (CN)
(72) Inventor: CHEN, Ying, Shenzhen, Guangdong 518129 (CN); KONG, Chuili, Shenzhen, Guangdong 518129 (CN); WANG, Jun, Shenzhen, Guangdong 518129 (CN)
(74) Representative: Gill Jennings & Every LLP
(86) International application number: PCT/CN2023/105052
(87) International publication number: WO 2024/022033

(56) References cited:
- WO-A2-2021/202404
- CN-A- 109 121 201
- CN-A- 110 100 485
- CN-A- 112 584 482
- CN-A- 113 196 855
- US-A1- 2018 084 546

## Description

### TECHNICAL FIELD

Embodiments of this application relate to the field of communication technologies, and in particular, to a communication method and apparatus.

### BACKGROUND

A non-terrestrial network (non-terrestrial network, NTN) has advantages of a wide coverage area, a long communication distance, high reliability, high flexibility, a high throughput, and being free from impact of a geographical environment, a climate condition, and a natural disaster, and has been widely used in fields such as aviation communication, maritime communication, and military communication. The NTN is introduced into a mobile communication system, for example, into a 5th generation (5th generation, 5G) system, so that not only a communication service can be provided for an area that is difficult to be covered by a terrestrial network, such as an ocean or a forest, but also communication reliability can be enhanced. For example, a more stable and high-quality communication service is provided for a train, an airplane, and users on such means of transportation, and more data transmission resources are provided, for example, more terminal device connections are supported.

A characteristic of the NTN is that a transmission delay is large. When the NTN uses a time division duplex (time division duplex, TDD) communication mode, one slot may be used to transmit an uplink signal or a downlink signal. Generally, a terminal device may send an uplink signal in one slot through a timing advance. However, in a communication scenario with a large delay, a large timing advance needs to be introduced to implement uplink signal synchronization between different terminal devices. Therefore, when the terminal device sends the uplink signal through the timing advance, sending of the uplink signal may occupy a slot for transmitting a downlink signal, conflicting with time at which the terminal device receives the downlink signal. Therefore, when the TDD communication mode is used, how to avoid a conflict between sending the uplink signal and receiving the downlink signal by the terminal device is an urgent technical problem that needs to be resolved currently.

WO2021202404A2 teaches signalling a radio frame timing structure offset and using that indication to compute a timing advance for uplink transmission.

### SUMMARY

Embodiments of this application provide a communication method and apparatus, to avoid a problem that a conflict exists between sending an uplink signal and receiving a downlink signal by a terminal device when a TDD communication mode is used.

According to a first aspect, an embodiment of this application provides a communication method. The method includes: A second communication apparatus determines first indication information, where the first indication information indicates a first time division duplex frame structure of a first beam group scheduled by the second communication apparatus in a first scheduling time period, the first beam group includes at least one first beam, and the first time division duplex frame structure corresponds to a first timing advance (timing advance, TA) change range of the first beam group. The second communication apparatus sends the first indication information through the first beam group. The second communication apparatus receives an uplink signal from a first communication apparatus based on the first time division duplex frame structure, where the first communication apparatus is located in a coverage area of the first beam group.

In the foregoing communication method, the first communication apparatus may be a terminal device, a component (for example, a processor, a chip, or a chip system) of the terminal device, an apparatus that matches the terminal device, or the like. The second communication apparatus may be a network device, a component (for example, a processor, a chip, or a chip system) of the network device, an apparatus that matches the network device, or the like.

An example in which the first communication apparatus is the terminal device, and the second communication apparatus is the network device is used. According to the foregoing method, a time division duplex frame structure of a scheduled beam group may be determined based on a TA change range of the beam group scheduled by the network device in a scheduling time period, and the time division duplex frame structure used for communication between the network device and the terminal device is enabled to adapt to a TA determined by the terminal device, so that a problem that a conflict exists between sending an uplink signal and receiving a downlink signal by the terminal device when a TDD communication mode is used is avoided. In addition, beams in a beam group scheduled by the network device use a same time division duplex frame structure, so that interference between the beams can be reduced, and quality of communication between the network device and the terminal device can be improved.

In a possible design, the first time division duplex frame structure is one of a plurality of time division duplex frame structures. Each time division duplex frame structure in the plurality of time division duplex frame structures corresponds to one TA change subinterval of the second communication apparatus, and a TA change subinterval corresponding to the first time division duplex frame structure includes the first TA change range. Optionally, the first indication information is an index, and the index corresponds to the first time division duplex frame structure.

The example in which the first communication apparatus is the terminal device and the second communication apparatus is the network device is still used. In the foregoing design, a total TA change interval within service time of the network device may be divided into a plurality of TA change subintervals based on a feature that the network device such as a satellite or a high-altitude platform runs according to a specific rule and the total TA change interval within the service time of the network device is fixed. A union set of the plurality of TA change subintervals is equal to the total TA change interval within the service time of the network device, and the plurality of TA change subintervals may overlap, or may not overlap. The network device may configure, based on the plurality of TA change subintervals, a plurality of time division duplex frame structures respectively corresponding to the plurality of TA change subintervals, and may configure the plurality of time division duplex frame structures for the terminal device in a manner like broadcast or preconfiguring. When determining a time division duplex frame structure of a beam group scheduled in a scheduling time period, the network device may use a time division duplex frame structure corresponding to a TA change subinterval including a TA change range of the beam group scheduled in the scheduling time period as an applied time division duplex frame structure, and indicate the time division duplex frame structure to a terminal device in a coverage area of the scheduled beam group by using a manner such as an index corresponding to the time division duplex frame structure, so that signaling overheads can be reduced, and a change of the time division duplex frame structure within the service time of the network device can be reduced.

In a possible design, an uplink-downlink resource configuration periodicity of the first time division duplex frame structure is determined based on a minimum TA in the first TA change subinterval, and a size of a first uplink-downlink resource guard band in the first time division duplex frame structure is determined based on a difference between a maximum TA and the minimum TA in the first TA change subinterval. The uplink-downlink resource configuration periodicity may be duration of one uplink-downlink resource repetition in the time division duplex frame structure. For example, in the time division duplex frame structure, a periodicity cycle is performed based on three uplink time domain units, three downlink time domain units, and one uplink-downlink resource guard time domain unit, and three uplink time domain units, three downlink time domain units, and one uplink-downlink resource guard time domain unit form one uplink-downlink resource configuration periodicity. The size of the uplink-downlink resource guard band may be duration or a quantity corresponding to an uplink-downlink resource guard time domain unit in an uplink-downlink resource configuration periodicity, or duration or a quantity corresponding to an uplink-downlink resource guard time domain unit used to separate a downlink time domain unit and an uplink time domain unit.

The example in which the first communication apparatus is the terminal device and the second communication apparatus is the network device is still used. **In** the foregoing design, the uplink-downlink resource configuration periodicity of the time division duplex frame structure is determined based on the minimum TA in the TA change subinterval, and the size of the uplink-downlink resource guard band in the time division duplex frame structure is determined based on the difference between the maximum TA and the minimum TA in the TA change subinterval. This can ensure that an uplink signal obtained through a timing advance of the terminal device is sent on an uplink time domain unit or an uplink-downlink resource guard time domain unit, avoiding a problem that a conflict exists between sending an uplink signal and receiving a downlink signal by the terminal device.

In a possible design, when a maximum TA corresponding to at least one newly added second beam in the first beam group increases with respect to the maximum TA in the TA change subinterval corresponding to the first time division duplex frame structure, the second communication apparatus sends second indication information through the first beam group. The second indication information indicates a second uplink-downlink resource guard band in the first time division duplex frame structure, and a size of the second uplink-downlink resource guard band is determined based on an increment of the maximum TA.

The example in which the first communication apparatus is the terminal device and the second communication apparatus is the network device is still used. In the foregoing design, when a new beam is added for the network device in the scheduling time period, an uplink-downlink resource guard band in the time division duplex frame structure may be added to adapt to a TA change caused by the newly added beam, so that complexity of scheduling the time division duplex frame structure is reduced.

In a possible design, the second uplink-downlink resource guard band includes one or more uplink time domain units that are adjacent to the first uplink-downlink resource guard band and that are in each uplink-downlink resource configuration periodicity of the first time division duplex frame structure, and duration of the one or more uplink time domain units is greater than or equal to the increment of the maximum TA. Alternatively, the second uplink-downlink resource guard band includes one or more downlink time domain units that are adjacent to the first uplink-downlink resource guard band and that are in each uplink-downlink resource configuration periodicity of the first time division duplex frame structure, and duration of the one or more downlink time domain units is greater than or equal to the increment of the maximum TA. Alternatively, the second uplink-downlink resource guard band includes one or more uplink time domain units and one or more downlink time domain units that are adjacent to the first uplink-downlink resource guard band and that are in each uplink-downlink resource configuration periodicity of the first time division duplex frame structure, and total duration of the one or more uplink time domain units and the one or more downlink time domain units is greater than or equal to the increment of the maximum TA.

In the foregoing design, in a scenario with a high uplink throughput requirement, to ensure an uplink throughput, a resource of a downlink time domain unit may be sacrificed to adapt to the TA change caused by the newly added beam; or in a scenario with a high downlink throughput requirement, to ensure a downlink throughput, a resource of an uplink time domain unit may be sacrificed to adapt to the TA change caused by the newly added beam, so that resource utilization can be improved.

In a possible design, the method further includes: The second communication apparatus sends third indication information through a second beam group scheduled in a second scheduling time period. The third indication information indicates a second time division duplex frame structure of the second beam group, the second beam group includes at least one third beam, and the second time division duplex frame structure corresponds to a second TA change range of the second beam group.

The example in which the first communication apparatus is the terminal device and the second communication apparatus is the network device is still used. In the foregoing design, the network device may indicate a corresponding time division duplex frame structure based on the change range of the scheduled beam group, to avoid the problem that a conflict exists between sending an uplink signal and receiving a downlink signal by the terminal device when the TDD communication mode is used.

According to a second aspect, an embodiment of this application provides a communication method. The method includes: A first communication apparatus receives first indication information from a second communication apparatus, where the first indication information indicates a first time division duplex frame structure of a first beam group scheduled by the second communication apparatus in a first scheduling time period, the first beam group includes at least one first beam, the first time division duplex frame structure corresponds to a first timing advance TA change range of the first beam group, and the first communication apparatus is located in a coverage area of the first beam group; and the first communication apparatus sends an uplink signal to the second communication apparatus based on the first time division duplex frame structure.

In the foregoing communication method, the first communication apparatus may be a terminal device, a component (for example, a processor, a chip, or a chip system) of the terminal device, an apparatus that matches the terminal device, or the like. The second communication apparatus may be a network device, a component (for example, a processor, a chip, or a chip system) of the network device, an apparatus that matches the network device, or the like.

In a possible design, the first time division duplex frame structure is one of a plurality of time division duplex frame structures. Each time division duplex frame structure in the plurality of time division duplex frame structures corresponds to one TA change subinterval of the second communication apparatus, and a TA change subinterval corresponding to the first time division duplex frame structure includes the first TA change range. Optionally, the first indication information is an index, and the index corresponds to the first time division duplex frame structure.

In a possible design, an uplink-downlink resource configuration periodicity of the first time division duplex frame structure is determined based on a minimum TA in the first TA change subinterval, and a size of a first uplink-downlink resource guard band in the first time division duplex frame structure is determined based on a difference between a maximum TA and the minimum TA in the first TA change subinterval.

In a possible design, the method further includes: The first communication apparatus receives second indication information from the second communication apparatus. The second indication information indicates a second uplink-downlink resource guard band in the first time division duplex frame structure, and a size of the second uplink-downlink resource guard band is determined based on an increment of a maximum TA corresponding to at least one newly added second beam in the first beam group with respect to the maximum TA in the TA change subinterval corresponding to the first time division duplex frame structure.

In a possible design, the second uplink-downlink resource guard band includes one or more uplink time domain units that are adjacent to the first uplink-downlink resource guard band and that are in each uplink-downlink resource configuration periodicity of the first time division duplex frame structure, and duration of the one or more uplink time domain units is greater than or equal to the increment of the maximum TA. Alternatively, the second uplink-downlink resource guard band includes one or more downlink time domain units that are adjacent to the first uplink-downlink resource guard band and that are in each uplink-downlink resource configuration periodicity of the first time division duplex frame structure, and duration of the one or more downlink time domain units is greater than or equal to the increment of the maximum TA. Alternatively, the second uplink-downlink resource guard band includes one or more uplink time domain units and one or more downlink time domain units that are adjacent to the first uplink-downlink resource guard band and that are in each uplink-downlink resource configuration periodicity of the first time division duplex frame structure, and total duration of the one or more uplink time domain units and the one or more downlink time domain units is greater than or equal to the increment of the maximum TA.

In a possible design, the method further includes: The first communication apparatus receives third indication information from the second communication apparatus. The third indication information indicates a second time division duplex frame structure of a second beam group scheduled by the second communication apparatus in a second scheduling time period, the second beam group includes at least one third beam. The second time division duplex frame structure corresponds to a second TA change range of the second beam group, and the first communication apparatus is located in a coverage area of the second beam group.

According to a third aspect, an embodiment of this application provides a communication apparatus. The communication apparatus includes an interface circuit and a processor, and the processor and the interface circuit are coupled to each other. The processor is configured to implement the method according to any one of the first aspect or the possible designs of the first aspect by using a logic circuit or by executing instructions. The interface circuit is configured to receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transceiver, or an input/output interface.

According to a fourth aspect, an embodiment of this application provides a communication apparatus. The communication apparatus includes an interface circuit and a processor, and the processor and the interface circuit are coupled to each other. The processor is configured to implement the method according to any one of the second aspect or the possible designs of the second aspect by using a logic circuit or by executing instructions. The interface circuit is configured to receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transceiver, or an input/output interface.

### BRIEF DESCRIPTION OF DRAWINGS

FIG. 1 is a diagram of a network architecture according to an embodiment of this application;
FIG. 2A, FIG. 2B, and FIG. 2C are diagrams of communication scenarios according to an embodiment of this application;
FIG. 3A and FIG. 3B are diagrams of timing advance adjustment according to an embodiment of this application;
FIG. 4 is an interaction diagram of a communication method according to an embodiment of this application;
FIG. 5 is a diagram of distances between a network device and a terminal device at different elevation angles according to an embodiment of this application;
FIG. 6 is a diagram of a curve of elevation angles and TAs according to an embodiment of this application;
FIG. 7 is a first diagram of a time division duplex frame structure according to an embodiment of this application;
FIG. 8 is a second diagram of a time division duplex frame structure according to an embodiment of this application;
FIG. 9 is a first application diagram of a time division duplex frame structure according to an embodiment of this application;
FIG. 10 is a second application diagram of a time division duplex frame structure according to an embodiment of this application;
FIG. 11 is a first diagram of adjustment of a time division duplex frame structure according to an embodiment of this application;
FIG. 12 is a second diagram of adjustment of a time division duplex frame structure according to an embodiment of this application;
FIG. 13 is a third diagram of adjustment of a time division duplex frame structure according to an embodiment of this application;
FIG. 14 is a first diagram of a structure of a communication apparatus according to an embodiment of this application; and
FIG. 15 is a second diagram of a structure of a communication apparatus according to an embodiment of this application.

### DESCRIPTION OF EMBODIMENTS

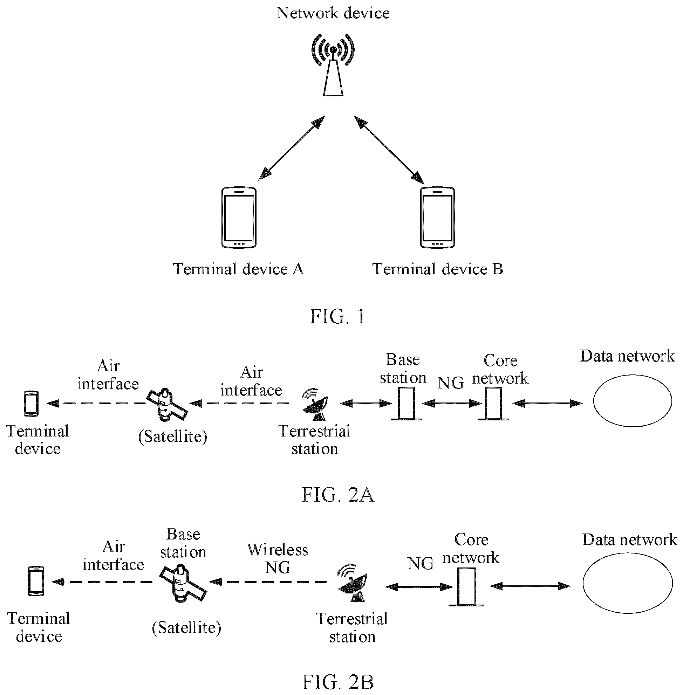

The technical solutions in embodiments of this application may be applied to various communication systems, for example, a 5G communication system and an NTN communication system, or may be applied to a communication system evolved after 5G, such as a 6th generation (6th generation, 6G) communication system. FIG. 1 is a diagram of an architecture of a communication system according to an embodiment of this application. The communication system includes a network device and a terminal device. For example, there is one network device, and there are two terminal devices (a terminal device A and a terminal device B). The terminal device A and the terminal device B may separately or simultaneously communicate with the network device. It should be noted that a quantity of terminal devices and a quantity of network devices in the communication system shown in FIG. 1 are not limited in embodiments of this application.

The terminal device may also be referred to as a terminal (terminal), user equipment (user equipment, UE), a mobile station (mobile station, MS), a mobile terminal, or the like, and is an apparatus or a device having a wireless communication function. The terminal device may be widely used in various scenarios, for example, machine type communication (machine type of communication, MTC), internet of things (internet of things, IoT), vehicle to everything (vehicle to everything, V2X), virtual reality, augmented reality, industrial control, self-driving, telemedicine, smart grid, smart furniture, smart office, smart wearable, smart transportation, and smart city. The terminal device may be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a customer-premises equipment (customer-premises equipment, CPE), a smart point of sale (point of sale, POS) machine, a wearable device, a vehicle, an uncrewed aerial vehicle, a helicopter, a plane, a ship, a robot, a mechanical arm, a smart home device, an MTC device, a terrestrial station, or the like. A specific technology and a specific device form used by the terminal device are not limited in embodiments of this application.

The network device may also be referred to as an access network (access network, AN) device or a radio access network (radio access network, RAN) device, and is an apparatus or a device that may be deployed in a radio access network to provide a wireless communication function for the terminal device. The network device may be a base station used for wireless communication, such as an artificial earth satellite and a high-altitude aircraft, for example, a medium earth orbit (medium earth orbit, MEO) satellite or a low earth orbit (low earth orbit, LEO) satellite of a non-geostationary earth orbit (non-geostationary earth orbit, NGEO), a high altitude platform station (high altitude platform station, HAPS), an evolved NodeB (evolved NodeB, eNB), or a 5G base station (gNB). Optionally, the network device in this embodiment of this application may include various forms of base stations, for example, a macro base station, a micro base station (also referred to as a small cell), a relay station, an access point, a device that implements a base station function in a communication system evolved after 5G, a transmitting and receiving point (transmitting and receiving point, TRP), a transmitting point (transmitting point, TP), a mobile switching center, and a device that perform a base station function in device-to-device (Device-to-Device, D2D), vehicle-to-everything (vehicle-to-everything, V2X), and machine-to-machine (machine-to-machine, M2M) communication, and may further include a central unit (central unit, CU), a distributed unit (distributed unit, DU), and the like in a cloud access network (cloud radio access network, C-RAN) system. This is not limited in embodiments of this application.

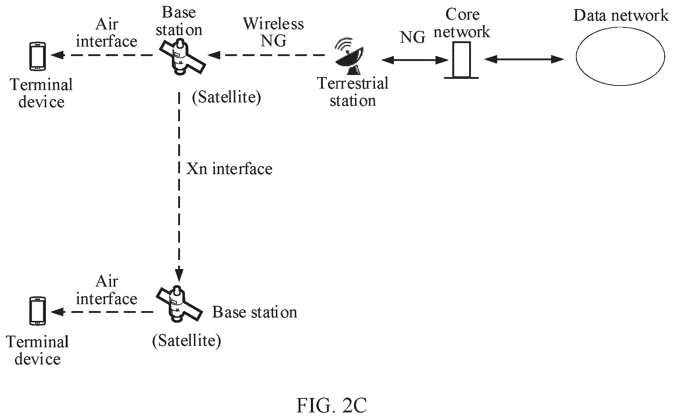

For example, the network device is a satellite. Communication scenarios to which this embodiment of this application is specifically applied may be shown in FIG. 2A, FIG. 2B, and FIG. 2C.

In a scenario shown in FIG. 2A, a base station is deployed on the ground, a satellite is connected to a terrestrial station through an air interface, and the terrestrial station may be connected to the base station through a radio or line link. A terminal device on the ground accesses a mobile communication network through an air interface (there may be various types of air interfaces, for example, a 5G air interface), and the satellite is used as a transmission node to forward information of the terminal device.

In a scenario shown in FIG. 2B, a base station is deployed on a satellite, the satellite is connected to a terrestrial station through an air interface, and the terrestrial station may be connected to a core network through a radio or line link. A terminal device on the ground communicates with a satellite base station through the air interface, to access a mobile communication network. As a base station, the satellite is connected to the terrestrial station through an NG interface of the air interface, and the terrestrial station is connected to the core network through the NG interface. The NG interface may be in a wireless form or a wired form.

Compared with the scenario shown in FIG. 2B, in a scenario shown in FIG. 2C, a communication scenario between satellite base stations is added. Specifically, the satellite base stations may communicate with each other through an Xn interface.

In FIG. 2A to FIG. 2C, the terminal device may include various types of terminal devices that support new radio, for example, the various types of terminals listed above. The terminal device may access a satellite network through an air interface and initiate services such as call and internet access.

The base station is mainly configured to provide a radio access service, schedule a radio resource to an accessing terminal device, and provide a reliable radio transmission protocol, data encryption protocol, and the like.

The core network is mainly configured to provide functions such as user access control, mobility management, session management, user security authentication, and charging. The core network includes a plurality of functional units, which may be classified into control-plane functional entities and data-plane functional entities.

The terrestrial station is mainly responsible for forwarding signaling and service data between the satellite and the base station or between the satellite and the core network.

The air interface indicates a radio link between the terminal device and the base station.

The Xn interface indicates an interface between the satellite base stations, and is mainly used for signaling exchange such as handover.

The NG interface indicates an interface between the base station and the core network, an interface between the terrestrial station and the core network, or an interface between the satellite base station and the terrestrial station (in this case, the interface is a radio link), and is mainly used to exchange signaling such as non-access stratum (non-access stratum, NAS) of the core network and service data of a user.

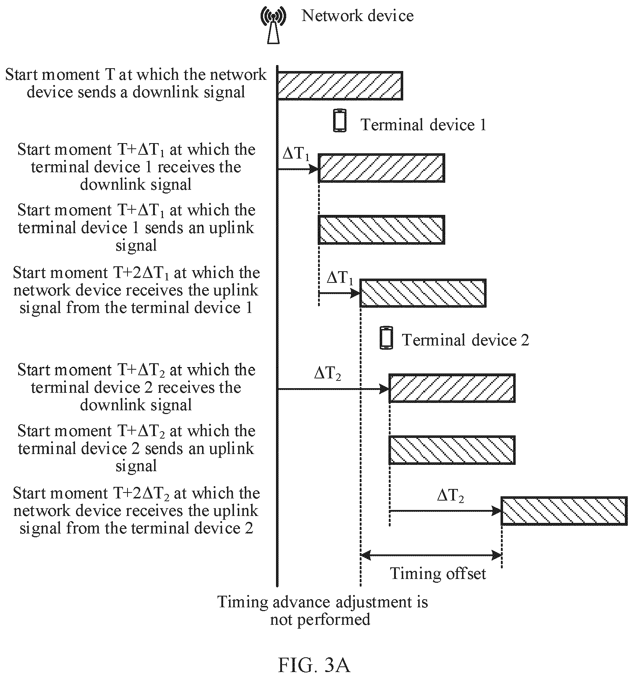

Before embodiments of this application are described, some terms used in this application are explained and described, to facilitate understanding for a person skilled in the art.
(1) Staring beam: The staring beam indicates that a beam of a satellite always serves a specific area in a satellite movement process, and a network side needs to continuously adjust a direction of the beam based on movement of the satellite, to ensure that the specific area is covered by the beam of the satellite within a time period during which the satellite is visible.
(2) Non-staring beam: The non-staring beam indicates that a direction of a beam of a satellite almost does not change in a satellite movement process, and an area served by the beam moves with movement of the satellite.
(3) Uplink-downlink resource configuration periodicity: The uplink-downlink resource configuration periodicity may be duration of one uplink-downlink resource repetition in a time division duplex frame structure. For example, in the time division duplex frame structure, a periodicity cycle is performed based on three uplink time domain units, three downlink time domain units, and one uplink-downlink resource guard time domain unit, and three uplink time domain units, three downlink time domain units, and one uplink-downlink resource guard time domain unit form one uplink-downlink resource configuration periodicity.
   A time domain unit may be a resource at different time granularities such as a subframe, a slot (slot), a mini-slot, or a symbol.
(4) Uplink-downlink resource guard band: The uplink-downlink resource guard band is generally a guard interval for switching a downlink time domain unit to an uplink time domain unit, and is used to separate the downlink time domain unit and the uplink time domain unit. A size of the uplink-downlink resource guard band may be duration or a quantity corresponding to an uplink-downlink resource guard time domain unit used to separate the downlink time domain unit and the uplink time domain unit, in other words, duration or a quantity corresponding to an uplink-downlink resource guard time domain unit in one uplink-downlink resource configuration periodicity.
(5) Timing advance TA: As shown in FIG. 3A, because there is a delay in signal propagation between a network device and a terminal device, an interval from a start moment at which the network device sends a downlink signal to a start moment at which a terminal device 1 receives the downlink signal is ΔT₁=d1/c. d1 is a distance between the network device and the terminal device 1, and c is a signal propagation speed. For wireless communication, c is a speed of light. Similarly, ΔT₂=d2/c. d2 is a distance between the network device and a terminal device 2. If the terminal device 1 does not perform uplink timing adjustment, and sends an uplink signal to the network device by using the start moment at which the terminal device 1 receives the downlink signal as a reference, an interval between a start moment at which the terminal device 1 sends the uplink signal and a start moment at which the network device receives the uplink signal is also ΔT₁. Therefore, for the terminal device 1, there is a time difference of 2ΔT₁ between the start moment at which the network device sends the downlink signal and the start moment at which the network device receives the uplink signal. Similarly, for the terminal device 2, there is a time difference of 2ΔT₂ between the start moment at which the network device sends the downlink signal and a start moment at which the network device receives an uplink signal. Because distances between the terminal devices and the network device are different, the uplink signals arrive at the network device at different time. Consequently, there may be a timing offset between the terminal devices. However, when the timing offset is greater than a cyclic prefix (cyclic prefix, CP) of an orthogonal frequency division multiple (orthogonal frequency division multiple, OFDM) symbol, the terminal devices interfere with each other.

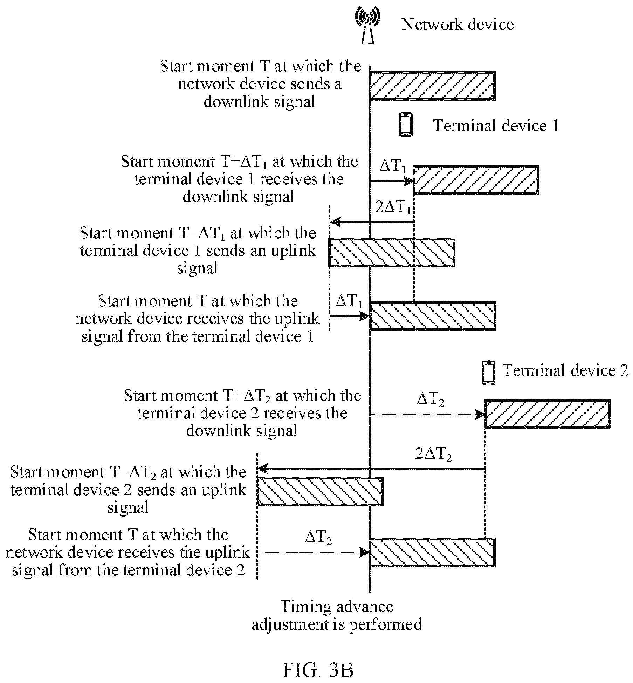

To resolve a problem of interference between the terminal devices, the terminal device needs to perform timing adjustment, which is also referred to as a timing advance, namely, a TA. As shown in FIG. 3B, a terminal device 1 advances a start moment for sending an uplink signal by 2ΔT₁, and a terminal device 2 advances a start moment for sending an uplink signal by 2ΔT₂. In this case, a network device receives the uplink signals of the terminal device 1 and the terminal device 2 at a same moment, so that a problem of mutual interference between the terminal devices is resolved. The timing advance is sometimes also referred to as round trip delay (round trip time, RTT).

It can be learned from the foregoing description about the TA that, for the terminal device, the TAis essentially a negative offset (negative offset) between a start moment at which a downlink signal is received and a start moment at which an uplink signal is transmitted. A terminal device relatively far away from the network device needs to send an uplink signal in advance compared with a terminal device relatively close to the network device because of a large transmission delay. A characteristic of an NTN is that a transmission delay is large. When the NTN uses a TDD communication mode, a large timing advance needs to be introduced to implement synchronization of uplink signals between terminal devices. The large TA may exceed a range of a CP. Therefore, when the terminal device sends an uplink signal through the TA, sending of the uplink signal may occupy a slot for transmitting a downlink signal, conflicting with time at which the terminal device receives the downlink signal. Therefore, when the TDD communication mode is used, how to avoid a conflict between sending the uplink signal and receiving the downlink signal by the terminal device is an urgent technical problem that needs to be resolved currently. In view of this, this application provides a communication method and apparatus, to adapt to the large-delay characteristic of the NTN by adjusting a frame structure, so as to avoid the conflict between sending the uplink signal and receiving the downlink signal by the terminal device when the NTN uses the TDD communication mode. The following describes in detail embodiments of this application with reference to the accompanying drawings.

In addition, it should be understood that ordinal numerals such as "first" and "second" in embodiments of this application are used to distinguish between a plurality of obj ects, and are not intended to limit sizes, content, an order, a time sequence, priorities, or importance degrees of the plurality of objects. For example, a first time division duplex frame structure and a second time division duplex frame structure do not indicate different priorities, importance degrees, or the like corresponding to the two time division duplex frame structures.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c represents: a, b, c, a and b, a and c, b and c, or a, b, and c, where a, b, and c may be singular or plural.

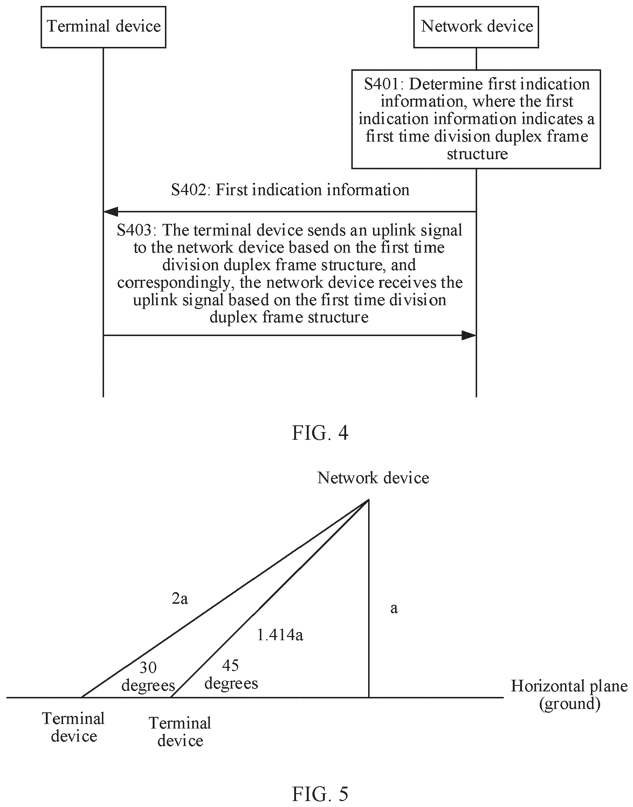

FIG. 4 is an interaction diagram of a communication method according to an embodiment of this application. In FIG. 4, an example in which the method is performed by a network device and a terminal device is used for illustrating the method. However, an execution body of the method is not limited in this application. For example, the network device in FIG. 4 may be a second communication apparatus, and the second communication apparatus may be a network device, a component (for example, a processor, a chip, or a chip system) of the network device, or an apparatus that matches the network device. The terminal device in FIG. 4 may be a first communication apparatus, and the first communication apparatus may be a terminal device, or a component (for example, a processor, a chip, or a chip system) of the terminal device, or an apparatus that matches the terminal device. The method includes the following steps.

S401: The network device determines first indication information, where the first indication information indicates a first time division duplex frame structure of a first beam group scheduled by the network device in a first scheduling time period.

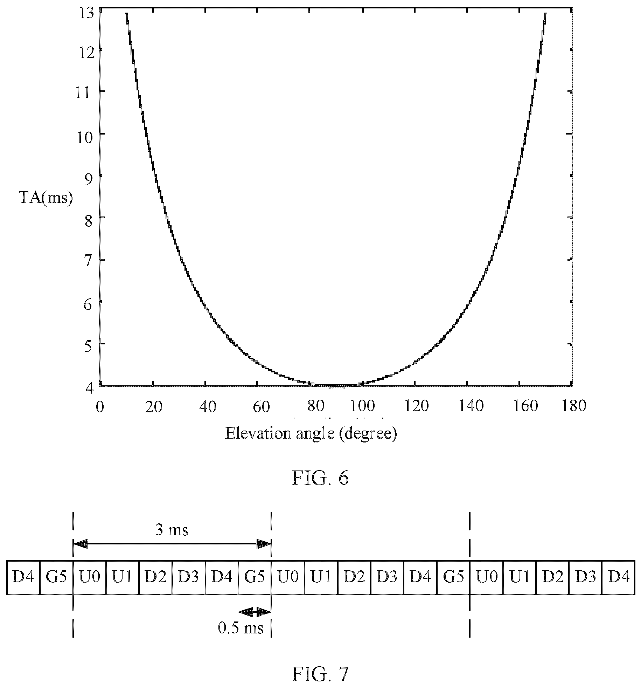

For a network device such as a satellite or a high-altitude platform, a vertical height from the network device to the ground is usually fixed, and a distance range between a terminal device located in a coverage area of a beam and the network device is determined based on an elevation angle range of the beam transmitted by the network device (an angle range between the transmitted beam and a horizontal plane). FIG. 5 is a diagram of distances between a network device and terminal devices at different elevation angles. If a vertical height from the network device to the ground is a, when an elevation angle of a beam transmitted by the network device is 30 degrees, a distance between a terminal device that uses the beam for communication and the network device is 2a. When an elevation angle of a beam transmitted by the network device is 45 degrees, a distance between a terminal device that uses the beam for communication and the network device is approximately 1.414a. A TA of the terminal device is determined based on the distance between the terminal device and the network device. Therefore, for one beam of the network device, a TA change range of the terminal device in a coverage area of the beam is determined based on an elevation angle range of the beam. FIG. 6 is a diagram of a curve corresponding to angles and TAs. It can be learned that different elevation angle ranges correspond to different TA change ranges. In FIG. 6, a horizontal axis represents an elevation (elevation) angle and a unit is degree (deg), and a vertical axis represents a TA and a unit is millisecond (ms). Therefore, in this embodiment of this application, a time division duplex frame structure of a beam group scheduled by the network device in a scheduling time period may be determined based on a TA change range of the beam group scheduled by the network device in the scheduling time period, to avoid a conflict between sending an uplink signal and receiving a downlink signal by the terminal device.

In a possible implementation, the network device may determine, based on a first TA change range of the first beam group scheduled in the first scheduling time period, the first time division duplex frame structure of the first beam group scheduled in the first scheduling time period. An uplink-downlink resource configuration periodicity of the first time division duplex frame structure may be determined based on a minimum TA in a first TA change subinterval, and a size of a first uplink-downlink resource guard band in the first time division duplex frame structure may be determined based on a difference between a maximum TA and the minimum TA in the first TA change subinterval.

In an example: The first beam group scheduled by the network device in the first scheduling time period includes a beam A, a beam B, and a beam C. A TA change range corresponding to the beam A is 3 ms to 3.5 ms, a TA change range corresponding to the beam B is 3 ms to 3.4 ms, and a TA change range corresponding to the beam C is 3.2 ms to 3.5 ms. Therefore, the network device may determine that the first TA change range of the first beam group scheduled in the first scheduling time period is 3 ms to 3.5 ms, a minimum TA in the first TA change range is 3 ms, and a difference between a maximum TA and the minimum TA is 0.5 ms. Then the network device may determine that the first time division duplex frame structure is a time division duplex frame structure in which the uplink-downlink resource configuration periodicity is 3 ms and the size of the first uplink-downlink resource guard band in the first time division duplex frame structure is 0.5 ms. As shown in FIG. 7, U represents an uplink time domain unit, D represents a downlink time domain unit, and G represents an uplink-downlink resource guard time domain unit. Duration corresponding to each time domain unit is 0.5 ms. The first time division duplex frame structure may be a time division duplex frame structure in which a periodicity cycle is performed based on two uplink time domain units, three downlink time domain units, and one uplink-downlink resource guard time domain unit, the uplink-downlink resource configuration periodicity is 3 ms (corresponding to duration of two uplink time domain units, three downlink time domain units, and one uplink-downlink resource guard time domain unit), and the size of the first uplink-downlink resource guard band is 0.5 ms (corresponding to duration of one uplink-downlink resource guard time domain unit).

It should be understood that the time domain unit may be a resource at different time granularities such as a subframe, a slot, a mini-slot, or a symbol. This is not limited in this embodiment of this application. The duration corresponding to the time domain unit is 0.5 ms, which is merely used as an example for description.

In addition, because a network device such as a satellite or a high-altitude platform usually moves around the earth periodically, a total TA change interval within service time of the network device is known. In some implementations, the total TA change interval within the service time of the network device may be further divided into a plurality of TA change subintervals. A union set of the plurality of TA change subintervals is equal to the total TA change interval within the service time of the network device, and the plurality of TA change subintervals may overlap or may not overlap. In addition, a corresponding time division duplex frame structure may be configured for each TA change subinterval in the plurality of TA change subintervals. When the first time division duplex frame structure of the first beam group scheduled by the network device in the first scheduling time period is determined, a time division duplex frame structure corresponding to a TA change subinterval including the first TA change range of the first beam group may be used as the first time division duplex frame structure of the first beam group scheduled by the network device in the first scheduling time period.

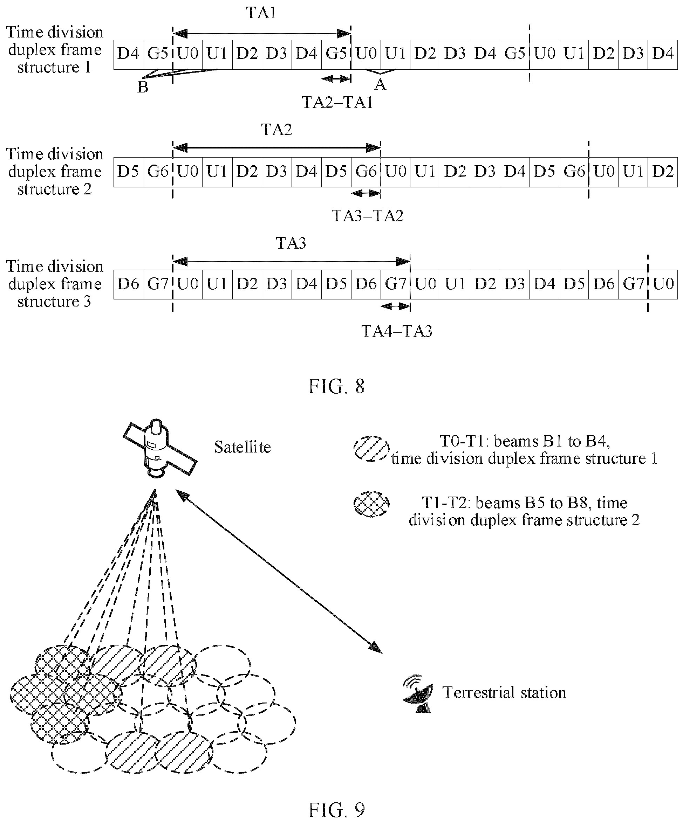

As shown in FIG. 8, U represents an uplink time domain unit, D represents a downlink time domain unit, and G represents an uplink-downlink resource guard time domain unit. The plurality of TA change subintervals include a TA change subinterval 1 "TA1-TA2", a TA change subinterval 2 "TA2-TA3", and a TA change subinterval 3 "TA3-TA4". The TA change subinterval 1 "TA1-TA2" corresponds to a time division duplex frame structure 1, an uplink-downlink resource configuration periodicity of the time division duplex frame structure 1 is TA1, and a size of an uplink-downlink resource guard band is a difference between TA2 and TA1 (that is, TA2-TA1). The TA change subinterval 2 "TA2-TA3" corresponds to a time division duplex frame structure 2, an uplink-downlink resource configuration periodicity of the time division duplex frame structure 2 is TA2, and a size of an uplink-downlink resource guard band is a difference between TA3 and TA2 (that is, TA3-TA2). A TA change subinterval 3 "TA3-TA4" corresponds to a time division duplex frame structure 3, an uplink-downlink resource configuration periodicity of the time division duplex frame structure 3 is TA3, and a size of an uplink-downlink resource guard band is a difference between TA4 and TA3 (that is, TA4-TA3). If the first TA change range of the first beam group belongs to the TA change subinterval 1 "TA1-TA2", the network device may determine that the first time division duplex frame structure of the first beam group scheduled by the network device in the first scheduling time period is the time division duplex frame structure 1.

In a possible implementation, when the total TA change interval within the service time of the network device is divided into the plurality of TA change subintervals, a granularity of division into the TA change subintervals may be determined in consideration of factors such as a coverage area and staring duration of a beam scheduled by the network device. A larger granularity of division into the TA change subintervals indicates lower scheduling complexity for the network device, and a smaller granularity of division into the TA change subintervals indicates higher scheduling complexity for the network device.

In an example, when division into the TA change subintervals is performed based on a possible TA change range in an area served by the network device and the service time (in other words, a total TA change interval within the service time of the network device), if the total TA change interval is from 4 ms to 12 ms and is divided based on a granularity of 1 ms (which may also be referred to as an interval), there are eight different TA change subintervals. If the total TA change interval is divided based on a granularity of 2 ms, there are four different TA change subintervals. Compared with division at the granularity of 1 ms, division at the granularity of 2 ms reduces a total quantity of time division duplex frame structures scheduled by the network device by half, so that scheduling complexity for the network device can be greatly reduced.

Therefore, in this embodiment of this application, when the coverage area of the beam scheduled by the network device is larger (in other words, a corresponding TA change range is larger) and staring duration is shorter (in other words, the coverage area of the beam changes more frequently and a corresponding TA changes more frequently), a relatively large granularity may be used to perform the TA change subinterval, to reduce scheduling complexity for the network device.

S402: The network device sends the first indication information through the first beam group. Correspondingly, the terminal device located in a coverage area of the first beam group receives the first indication information.

In this embodiment of this application, the first indication information may be carried in a system information block (system information block, SIB), a master information block (master information block, MIB), radio resource control (radio resource control, RRC) signaling, downlink control information (downlink control information, DCI), or a media access control (media access control, MAC) control element (control element, CE). The network device may send, in a manner such as broadcast, multicast, or unicast, the first indication information to the terminal device located in the coverage area of the first beam group.

Specifically, the first indication information may indicate a specific frame structure of a first time division duplex frame. In an example in which the first time division duplex frame structure is shown in FIG. 7, the first indication information may indicate that in the first time division duplex frame structure, a cycle is performed by using two uplink time domain units, three downlink time domain units, and one uplink-downlink resource guard time domain unit as an uplink-downlink resource configuration periodicity.

In some embodiments, to reduce signaling overheads, the first indication information may alternatively be an index or other information corresponding to the first time division duplex frame. An example in which the total TA change interval within the service time of the network device is divided into the plurality of TA change subintervals, a corresponding time division duplex frame structure may be configured for each TA change subinterval in the plurality of TA change subintervals, and when the first time division duplex frame structure of the first beam group scheduled by the network device in the first scheduling time period is determined, the time division duplex frame structure corresponding to the TA change subinterval including the first TA change range of the first beam group may be used as the first time division duplex frame structure of the first beam group scheduled by the network device in the first scheduling time period is still used. Time division duplex frame structures respectively corresponding to the plurality of TA change subintervals of the network device and indexes associated with the time division duplex frame structures may be configured for the terminal device in a manner such as broadcast or preconfiguring by the network device. When indicating the first time division duplex frame structure to the terminal device, the network device may indicate, to the terminal device through the first indication information, an index associated with the first time division duplex frame structure, so that the terminal device determines, based on the index associated with the first time division duplex frame structure, the first time division duplex frame structure used for communication with the network device.

S403: The terminal device sends an uplink signal to the network device based on the first time division duplex frame structure, and correspondingly, the network device receives the uplink signal based on the first time division duplex frame structure.

For example, the first time division duplex frame structure is the time division duplex frame structure 1 shown in FIG. 8. A TA of the terminal device is in a range of TA1-TA2. If the network device schedules the terminal device to send an uplink signal on some or all resources of an uplink time domain unit (U0) and an uplink time domain unit (U1) that are located at A, after TA processing corresponding to the terminal device, because the TA corresponding to the terminal device is in the range of TA1-TA2, the terminal device actually sends the uplink signal on some resources of an uplink-downlink resource guard time domain unit (G5), an uplink time domain unit (U0), and an uplink time domain unit (U1) that are located at B, and the uplink signal is received by the network device in the uplink time domain unit (U0) and the uplink time domain unit (U1) that are located at A, and no conflict occurs during transmission of an uplink signal and a downlink signal between the network device and the terminal device.

Specifically, the network device may dynamically adjust, based on a TA change range of a beam group scheduled in each scheduling time period, a time division duplex frame structure used for communication with the terminal device. For example, the network device schedules a second beam group in a second scheduling time period after the first scheduling time period, and the network device may send third indication information through the second beam group scheduled in the second scheduling time period. The third indication information indicates a second time division duplex frame structure of the second beam group, and the second time division duplex frame structure corresponds to a second TA change range of the second beam group. The second beam group includes at least one third beam, and beams included in the second beam group may be completely the same as or completely different from beams included in the first beam group, or may be partially the same as or partially different from beams included in the first beam group. This is not limited in this application.

An example as shown in FIG. 8 in which the plurality of TA change subintervals include the TA change subinterval 1 "TA1-TA2", the TA change subinterval 2 "TA2-TA3", and the TA change subinterval 3 "TA3-TA4", the TAchange subinterval 1 "TA1-TA2" corresponds to the time division duplex frame structure 1, the TA change subinterval 2 "TA2-TA3" corresponds to the time division duplex frame structure 2, and the TA change subinterval 3 "TA3-TA4" corresponds to the time division duplex frame structure 3 is still used.

For example, the network device is a satellite, and a quantity of beams that can be simultaneously served by the satellite is 4. As shown in FIG. 9, when a beam of the satellite is a non-staring beam and does not specifically serve one or more areas, serving beams of the satellite at a moment of T0-T1 are beams B1 to B4, a corresponding TA change range is from TA1 to TA2, and a corresponding time division duplex frame structure is the time division duplex frame structure 1; and serving beams of the satellite at a moment of T1-T2 are beams B5 to B8, a corresponding TA change range is from TA2 to TA3, and a corresponding time division duplex frame structure is the time division duplex frame structure 2.

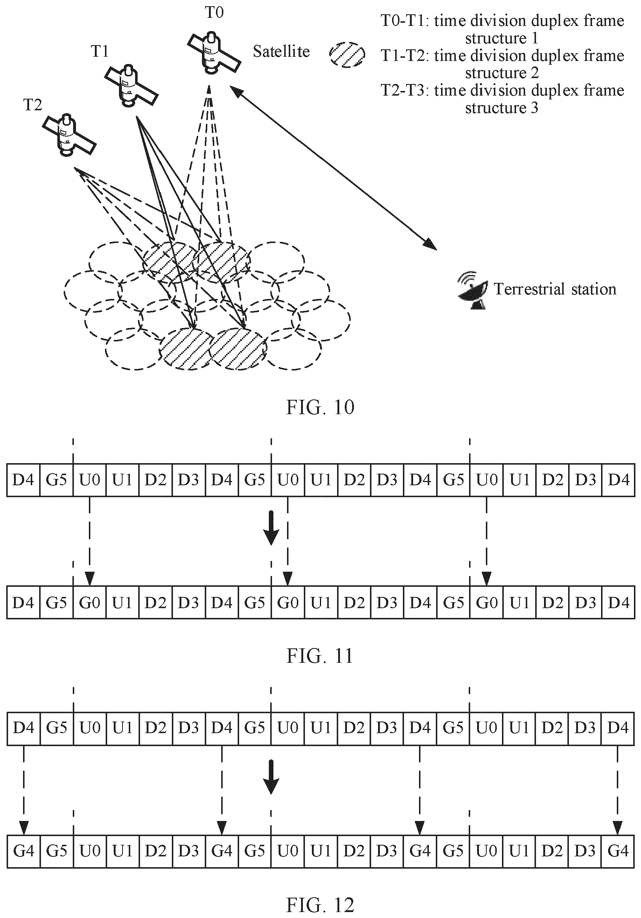

As shown in FIG. 10, when a beam of the satellite is a staring beam, in other words, the beam of the satellite covers a fixed area and specifically serves one or more areas, as the satellite moves, a TA change range of four serving beams of the satellite at a moment of T0-T1 is from TA1 to TA2, and a corresponding time division duplex frame structure is the time division duplex frame structure 1; a TA change range at a moment of T1-T2 is from TA2 to TA3, and a corresponding time division duplex frame structure is the time division duplex frame structure 2; and a TA change range at a moment of T3-T4 is from TA3 to TA4, and a corresponding time division duplex frame structure is the time division duplex frame structure 3.

In this embodiment of this application, the satellite may select one time division duplex frame structure based on comprehensive TA changes of all beams in a scheduling time period, to ensure that a TA change of a scheduled beam is in a TA change subinterval corresponding to the time division duplex frame structure during a satellite movement process. In addition, because the same time division duplex frame structure is used for all scheduled beams, interference between the beams can be further reduced, and quality of communication with the terminal device can be improved.

In addition, because the satellite usually moves around the earth periodically, beam scheduling is performed in an approximate polling manner in entire service time of the satellite. In the entire service time of the satellite, beam hopping manners may be the same, and TA change rules are also the same. Therefore, the satellite may further schedule, according to a specific rule, time division duplex frame structures corresponding to different TA change subintervals to match a scheduled beam, so that scheduling complexity is reduced.

In some implementations, because different beams may have different service time, beam shut-off and new beam lighting may exist in some scheduling time periods. When the network device has a newly added beam in a scheduling time period, a minimum TA corresponding to the newly added beam does not reduce with respect to an original TA change range of the first time division duplex frame structure, and a maximum TA increases with respect to the original TA change range of the time division duplex frame structure, an uplink resource and/or a downlink resource may be sacrificed, and an uplink-downlink resource guard band in the time division duplex frame structure is added, to adapt to a TA change caused by the newly added beam, and reduce complexity of scheduling the time division duplex frame structure.

Specifically, when a maximum TA corresponding to at least one newly added second beam in the first beam group increases with respect to the maximum TA in the TA change subinterval corresponding to the first time division duplex frame structure, the network device may send second indication information through the first beam group. The second indication information indicates a second uplink-downlink resource guard band that is in the first time division duplex frame structure and that is determined based on an increment of the maximum TA.

Optionally, the terminal may obtain configurations of frame structures having different guard band sizes and corresponding indexes. The configurations may be delivered by the network device or predefined in a protocol. The network device may notify the terminal of a change of a frame structure by using an index. In other words, the second indication information includes an index, and there is a correspondence between the index and a frame structure having the second uplink-downlink resource guard band.

Optionally, the second indication information may indicate, in a direct configuration manner, the second uplink-downlink resource guard band that is in the first time division duplex frame structure and that is determined based on the increment of the maximum TA, or may indicate, in a deviation indication manner, the second uplink-downlink resource guard band that is in the first time division duplex frame structure and that is determined based on the increment of the maximum TA. For example, the second indication information includes two bits. 01 indicates that a DL of one slot or one symbol is changed into a guard period, and 11 indicates that a UL of one slot or one symbol is changed into a guard period.

In a possible implementation, if the maximum TA corresponding to the at least one newly added second beam in the first beam group increases with respect to the maximum TA in the TA change subinterval corresponding to the first time division duplex frame structure, in a scenario with a high downlink throughput requirement, to ensure a downlink throughput, an uplink resource, in other words, an uplink time domain unit, may be sacrificed. The second uplink-downlink resource guard band indicated by the second indication information sent by the network device may include one or more uplink time domain units that are adjacent to the first uplink-downlink resource guard band and that are in each uplink-downlink resource configuration periodicity of the first time division duplex frame structure. Duration of the one or more uplink time domain units is greater than or equal to the increment of the maximum TA.

As shown in FIG. 11, when the increment of the maximum TA corresponds to duration of one time domain unit, an uplink time domain unit that is adjacent to the first uplink-downlink resource guard band and that is in each uplink-downlink resource configuration periodicity of the first time division duplex frame structure may be converted into an uplink-downlink resource guard time domain unit, and the uplink-downlink resource guard time domain unit is used as the second uplink-downlink resource guard band to adapt to a new TA change range. Specifically, the direct configuration manner may be used. For example, U0 is carried in the second indication information, to indicate to convert an uplink time domain unit (U0) that is adjacent to the first uplink-downlink resource guard band and that is in each uplink-downlink resource configuration periodicity of the first time division duplex frame structure into an uplink-downlink resource guard time domain unit. Alternatively, the deviation indication manner may be used. For example, 01 is carried in the second indication information, to indicate to convert an uplink time domain unit (U0) that is adjacent to the first uplink-downlink resource guard band and that is in each uplink-downlink resource configuration periodicity of the first time division duplex frame structure into an uplink-downlink resource guard time domain unit.

In a possible implementation, if the maximum TA corresponding to the at least one newly added second beam in the first beam group increases with respect to the maximum TA in the TA change subinterval corresponding to the first time division duplex frame structure, in a scenario with a high uplink throughput requirement, to ensure an uplink throughput, a downlink resource, in other words, a downlink time domain unit, may be sacrificed. The second uplink-downlink resource guard band indicated by the second indication information sent by the network device may include one or more downlink time domain units that are adjacent to the first uplink-downlink resource guard band and that are in each uplink-downlink resource configuration periodicity of the first time division duplex frame structure. Duration of the one or more downlink time domain units is greater than or equal to the increment of the maximum TA.

As shown in FIG. 12, when the increment of the maximum TA corresponds to duration of one time domain unit, a downlink time domain unit that is adjacent to the first uplink-downlink resource guard band and that is in each uplink-downlink resource configuration periodicity of the first time division duplex frame structure may be converted into an uplink-downlink resource guard time domain unit, and the uplink-downlink resource guard time domain unit is used as the second uplink-downlink resource guard band to adapt to a new TA change range. Specifically, the direct configuration manner may be used. For example, D4 is carried in the second indication information, to indicate to convert a downlink time domain unit (D4) that is adjacent to the first uplink-downlink resource guard band and that is in each uplink-downlink resource configuration periodicity of the first time division duplex frame structure into an uplink-downlink resource guard time domain unit. Alternatively, the deviation indication manner may be used. For example, 11 is carried in the second indication information, to indicate to convert a downlink time domain unit (D4) that is adjacent to the first uplink-downlink resource guard band and that is in each uplink-downlink resource configuration periodicity of the first time division duplex frame structure into an uplink-downlink resource guard time domain unit.

In a possible implementation, if the maximum TA corresponding to the at least one newly added second beam in the first beam group increases with respect to the maximum TA in the TA change subinterval corresponding to the first time division duplex frame structure, in a scenario in which uplink and downlink throughputs are balanced, to maintain balance between the uplink and downlink throughputs, both an uplink time domain unit and a downlink time domain unit may be sacrificed. The second uplink-downlink resource guard band indicated by the second indication information sent by the network device may include one or more uplink time domain units and one or more downlink time domain units that are adjacent to the first uplink-downlink resource guard band and that are in each uplink-downlink resource configuration periodicity of the first time division duplex frame structure. Total duration of the one or more uplink time domain units and the one or more downlink time domain units is greater than or equal to the increment of the maximum TA.

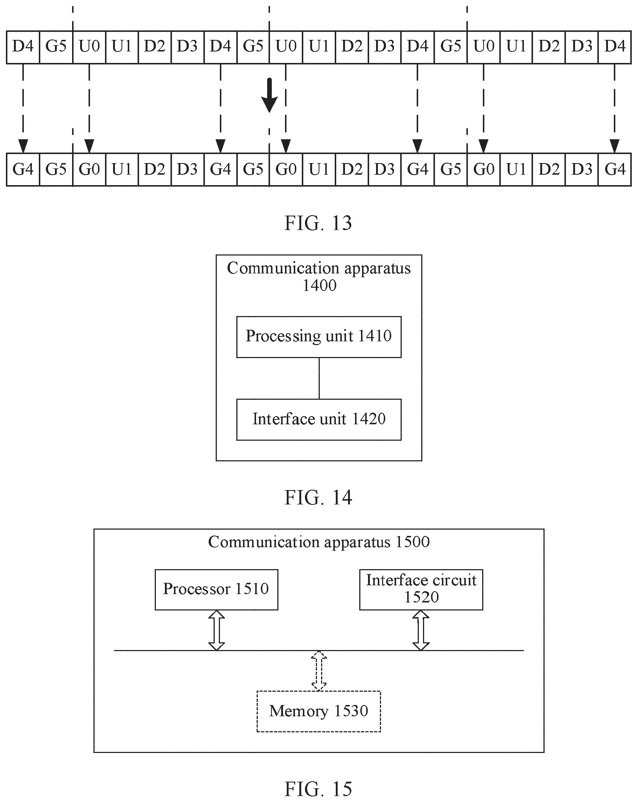

As shown in FIG. 13, when the increment of the maximum TA corresponds to duration of two time domain units, an uplink time domain unit and a downlink time domain unit that are adjacent to the first uplink-downlink resource guard band and that are in each uplink-downlink resource configuration periodicity of the first time division duplex frame structure may be converted into an uplink-downlink resource guard time domain unit, and the uplink-downlink resource guard time domain unit is used as the second uplink-downlink resource guard band to adapt to a new TA change range. Specifically, the direct configuration manner may be used. For example, U0 and D4 are carried in the second indication information, to indicate to convert an uplink time domain unit (U0) and a downlink time domain unit (D4) that are adjacent to the first uplink-downlink resource guard band and that are in each uplink-downlink resource configuration periodicity of the first time division duplex frame structure into an uplink-downlink resource guard time domain unit. Alternatively, the deviation indication manner may be used. For example, 01 and 11 are carried in the second indication information, to indicate to convert an uplink time domain unit (U0) and a downlink time domain unit (D4) that are adjacent to the first uplink-downlink resource guard band and that are in each uplink-downlink resource configuration periodicity of the first time division duplex frame structure into an uplink-downlink resource guard time domain unit.

In addition, it should be understood that the foregoing is described by using an example in which the second uplink-downlink resource guard band is a newly added uplink-downlink resource guard band (or uplink-downlink resource guard time domain unit) in the first time division duplex frame structure. In some implementations, the second uplink-downlink resource guard band indicated by the second indication information may alternatively be a new uplink-downlink resource guard band in the first time division duplex frame structure after the maximum TA increases. In other words, the second uplink-downlink resource guard band may alternatively be a sum of the first uplink-downlink resource guard band and the newly added uplink-downlink resource guard band in the first time division duplex frame structure. This is not limited in this embodiment of this application.

In addition, different uplink-downlink resource guard band sizes applicable to time division duplex frame structures corresponding to different TA change subintervals may alternatively be preconfigured in advance, and time division duplex frame structures corresponding to different uplink-downlink resource guard band sizes and corresponding indexes (or numbers) may be configured for the terminal device in a manner such as preconfiguring or broadcast by the network device. For example, the time division duplex frame structure 1 corresponding to the TA change subinterval is applicable to three different uplink-downlink resource guard band sizes in FIG. 11 to FIG. 13. Time division duplex frame structures (time division duplex frame structures indicated by thick arrows in FIG. 11 to FIG. 13) of the three different uplink-downlink resource guard band sizes in FIG. 11 to FIG. 13 and corresponding indexes (or numbers) may be configured for the terminal device. The network device may further notify the terminal device of a change by indicating an index (or a number).

In an example, the numbers corresponding to the time division duplex frame structures of the three different uplink-downlink resource guard band sizes in FIG. 11 to FIG. 13 are respectively 11, 12, and 13. The network device may send, to the terminal device, the second indication information including the number 11, to indicate to convert an uplink time domain unit that is adjacent to the first uplink-downlink resource guard band and that is in each uplink-downlink resource configuration periodicity of the first time division duplex frame structure into an uplink-downlink resource guard time domain unit, and use the uplink-downlink resource guard time domain unit as the second uplink-downlink resource guard band to adapt to a new TA change range. Alternatively, the terminal device is indicated to use the time division duplex frame structure in FIG. 11 (the time division duplex frame structure indicated by the thick arrow in FIG. 11) to adapt to a new TA change range.

It may be understood that, to implement the functions in the foregoing embodiments, the network device and the terminal device include corresponding hardware structures and/or software modules for performing the functions. A person skilled in the art should be easily aware that, based on the units and the method steps in the examples described in embodiments disclosed in this application, this application can be implemented through hardware or a combination of hardware and computer software. Whether a function is executed through hardware or hardware driven by computer software depends on particular application scenarios and design constraint conditions of the technical solutions.

FIG. 14 and FIG. 15 each are a diagram of a structure of a possible communication apparatus according to an embodiment of this application. These communication apparatuses may be configured to implement functions of the network device or the terminal device in the foregoing method embodiments, and therefore can also implement beneficial effects of the foregoing method embodiments. In a possible implementation, the communication apparatus may be a network device or a terminal device, or may be a module (for example, a chip) used in the network device or the terminal device.

As shown in FIG. 14, the communication apparatus 1400 includes a processing unit 1410 and an interface unit 1420. The interface unit 1420 may alternatively be a transceiver unit or an input/output interface. The communication apparatus 1400 may be configured to implement the function of the network device or the terminal device in the method embodiment shown in FIG. 4.

When the communication apparatus 1400 is configured to implement the function of the network device in the method embodiment shown in FIG. 4,
the processing unit 1410 is configured to determine first indication information, where the first indication information indicates a first time division duplex frame structure of a first beam group scheduled by the communication apparatus in a first scheduling time period, the first beam group includes at least one first beam, and the first time division duplex frame structure corresponds to a first timing advance TA change range of the first beam group. The interface unit 1420 is configured to send the first indication information through the first beam group. The processing unit 1410 is further configured to receive, by using the interface unit 1420, an uplink signal from a terminal device based on the first time division duplex frame structure, where the terminal device is located in a coverage area of the first beam group.

In a possible design, the first time division duplex frame structure is one of a plurality of time division duplex frame structures. Each time division duplex frame structure in the plurality of time division duplex frame structures corresponds to one TA change subinterval of the communication apparatus, and a TA change subinterval corresponding to the first time division duplex frame structure includes the first TA change range. Optionally, the first indication information is an index, and the index corresponds to the first time division duplex frame structure.

In a possible design, an uplink-downlink resource configuration periodicity of the first time division duplex frame structure is determined based on a minimum TA in the first TA change subinterval, and a size of a first uplink-downlink resource guard band in the first time division duplex frame structure is determined based on a difference between a maximum TA and the minimum TA in the first TA change subinterval.

In a possible design, when a maximum TA corresponding to at least one newly added second beam in the first beam group increases with respect to the maximum TA in the TA change subinterval corresponding to the first time division duplex frame structure, the interface unit 1420 is further configured to send second indication information through the first beam group. The second indication information indicates a second uplink-downlink resource guard band in the first time division duplex frame structure, and a size of the second uplink-downlink resource guard band is determined based on an increment of the maximum TA.

In a possible design, the second uplink-downlink resource guard band includes one or more uplink time domain units that are adjacent to the first uplink-downlink resource guard band and that are in each uplink-downlink resource configuration periodicity of the first time division duplex frame structure, and duration of the one or more uplink time domain units is greater than or equal to the increment of the maximum TA. Alternatively, the second uplink-downlink resource guard band includes one or more downlink time domain units that are adjacent to the first uplink-downlink resource guard band and that are in each uplink-downlink resource configuration periodicity of the first time division duplex frame structure, and duration of the one or more downlink time domain units is greater than or equal to the increment of the maximum TA. Alternatively, the second uplink-downlink resource guard band includes one or more uplink time domain units and one or more downlink time domain units that are adjacent to the first uplink-downlink resource guard band and that are in each uplink-downlink resource configuration periodicity of the first time division duplex frame structure, and total duration of the one or more uplink time domain units and the one or more downlink time domain units is greater than or equal to the increment of the maximum TA.

In a possible design, the interface unit 1420 is further configured to send third indication information through a second beam group scheduled in a second scheduling time period. The third indication information indicates a second time division duplex frame structure of the second beam group, the second beam group includes at least one third beam, and the second time division duplex frame structure corresponds to a second TA change range of the second beam group.

When the communication apparatus 1400 is configured to implement the function of the terminal device in the method embodiment shown in FIG. 4,
the interface unit 1420 is configured to receive first indication information from a network device, where the first indication information indicates a first time division duplex frame structure of a first beam group scheduled by the network device in a first scheduling time period, the first beam group includes at least one first beam, the first time division duplex frame structure corresponds to a first timing advance TA change range of the first beam group, and the communication apparatus is located in a coverage area of the first beam group. The processing unit 1410 is configured to send, by using the interface unit 1420, an uplink signal to the network device based on the first time division duplex frame structure.

In a possible design, the first time division duplex frame structure is one of a plurality of time division duplex frame structures. Each time division duplex frame structure in the plurality of time division duplex frame structures corresponds to one TA change subinterval of the network device, and a TA change subinterval corresponding to the first time division duplex frame structure includes the first TA change range. Optionally, the first indication information is an index, and the index corresponds to the first time division duplex frame structure.

In a possible design, an uplink-downlink resource configuration periodicity of the first time division duplex frame structure is determined based on a minimum TA in the first TA change subinterval, and a size of a first uplink-downlink resource guard band in the first time division duplex frame structure is determined based on a difference between a maximum TA and the minimum TA in the first TA change subinterval.

In a possible design, the interface unit 1420 is further configured to receive second indication information from the network device. The second indication information indicates a second uplink-downlink resource guard band in the first time division duplex frame structure, and a size of the second uplink-downlink resource guard band is determined based on an increment of a maximum TA corresponding to at least one newly added second beam in the first beam group with respect to the maximum TA in the TA change subinterval corresponding to the first time division duplex frame structure.

In a possible design, the second uplink-downlink resource guard band includes one or more uplink time domain units that are adjacent to the first uplink-downlink resource guard band and that are in each uplink-downlink resource configuration periodicity of the first time division duplex frame structure, and duration of the one or more uplink time domain units is greater than or equal to the increment of the maximum TA. Alternatively, the second uplink-downlink resource guard band includes one or more downlink time domain units that are adjacent to the first uplink-downlink resource guard band and that are in each uplink-downlink resource configuration periodicity of the first time division duplex frame structure, and duration of the one or more downlink time domain units is greater than or equal to the increment of the maximum TA. Alternatively, the second uplink-downlink resource guard band includes one or more uplink time domain units and one or more downlink time domain units that are adjacent to the first uplink-downlink resource guard band and that are in each uplink-downlink resource configuration periodicity of the first time division duplex frame structure, and total duration of the one or more uplink time domain units and the one or more downlink time domain units is greater than or equal to the increment of the maximum TA.

In a possible design, the interface unit 1420 is further configured to receive third indication information from the network device. The third indication information indicates a second time division duplex frame structure of a second beam group scheduled by the network device in a second scheduling time period, the second beam group includes at least one third beam. The second time division duplex frame structure corresponds to a second TA change range of the second beam group, and the communication apparatus is located in a coverage area of the second beam group.

As shown in FIG. 15, this application further provides a communication apparatus 1500. The communication apparatus 1500 includes a processor 1510 and an interface circuit 1520. The processor 1510 and the interface circuit 1520 are coupled to each other. It may be understood that the interface circuit 1520 may be a transceiver, an input/output interface, an input interface, an output interface, a communication interface, or the like. Optionally, the communication apparatus 1500 may further include a memory 1530, configured to store instructions executed by the processor 1510, store input data that the processor 1510 needs to run instructions, or store data generated after the processor 1510 runs instructions. Optionally, the memory 1530 may be integrated with the processor 1510.

When the communication apparatus 1500 is configured to implement the method shown in FIG. 4, the processor 1510 may be configured to implement the function of the processing unit 1410, and the interface circuit 1520 may be configured to implement the function of the interface unit 1420.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or instructions may be stored in a computer-readable storage medium, or transmitted from one computer-readable storage medium to another computer-readable storage medium. For example, the computer programs or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, use of the term "example" is intended to present a concept in a specific manner. Sequence numbers of the foregoing processes do not mean execution sequences. The execution sequences of the processes should be determined based on functions and internal logic of the processes.

## Claims

1. A communication method, comprising:
receiving, by a first communication apparatus, first indication information from a second communication apparatus, wherein the first indication information indicates a first time division duplex frame structure of a first beam group scheduled by the second communication apparatus in a first scheduling time period, the first beam group comprises at least one first beam, the first time division duplex frame structure corresponds to a first timing advance, TA change range of the first beam group, and the first communication apparatus is located in a coverage area of the first beam group; and
sending, by the first communication apparatus, an uplink signal to the second communication apparatus based on the first time division duplex frame structure.

2. The method according to claim 1, wherein the first time division duplex frame structure is one of a plurality of time division duplex frame structures, each time division duplex frame structure in the plurality of time division duplex frame structures corresponds to one TA change subinterval of the second communication apparatus, and a TA change subinterval corresponding to the first time division duplex frame structure comprises the first TA change range.

3. The method according to claim 2, wherein an uplink-downlink resource configuration periodicity of the first time division duplex frame structure is determined based on a minimum TA in the first TA change subinterval, and a size of a first uplink-downlink resource guard band in the first time division duplex frame structure is determined based on a difference between a maximum TA and the minimum TA in the first TA change subinterval.

4. The method according to claim 2 or 3, wherein the method further comprises:
receiving, by the first communication apparatus, second indication information from the second communication apparatus, wherein the second indication information indicates a second uplink-downlink resource guard band in the first time division duplex frame structure, and a size of the second uplink-downlink resource guard band is determined based on an increment of a maximum TA corresponding to at least one newly added second beam in the first beam group with respect to the maximum TA in the TA change subinterval corresponding to the first time division duplex frame structure.

5. The method according to claim 4, wherein the second uplink-downlink resource guard band comprises one or more uplink time domain units that are adjacent to the first uplink-downlink resource guard band and that are in each uplink-downlink resource configuration periodicity of the first time division duplex frame structure, and duration of the one or more uplink time domain units is greater than or equal to the increment of the maximum TA;
the second uplink-downlink resource guard band comprises one or more downlink time domain units that are adjacent to the first uplink-downlink resource guard band and that are in each uplink-downlink resource configuration periodicity of the first time division duplex frame structure, wherein duration of the one or more downlink time domain units is greater than or equal to the increment of the maximum TA; or
the second uplink-downlink resource guard band comprises one or more uplink time domain units and one or more downlink time domain units that are adjacent to the first uplink-downlink resource guard band and that are in each uplink-downlink resource configuration periodicity of the first time division duplex frame structure, wherein total duration of the one or more uplink time domain units and the one or more downlink time domain units is greater than or equal to the increment of the maximum TA.

6. The method according to any one of claims 1 to 5, wherein the first indication information is an index, and the index corresponds to the first time division duplex frame structure.

7. The method according to any one of claims 1 to 6, wherein the method further comprises:
receiving, by the first communication apparatus, third indication information from the second communication apparatus, wherein the third indication information indicates a second time division duplex frame structure of a second beam group scheduled by the second communication apparatus in a second scheduling time period, the second beam group comprises at least one third beam, the second time division duplex frame structure corresponds to a second TA change range of the second beam group, and the first communication apparatus is located in a coverage area of the second beam group.

8. A communication method, comprising:
determining, by a second communication apparatus, first indication information, wherein the first indication information indicates a first time division duplex frame structure of a first beam group scheduled by the second communication apparatus in a first scheduling time period, the first beam group comprises at least one first beam, and the first time division duplex frame structure corresponds to a first timing advance, TA change range of the first beam group;
sending, by the second communication apparatus, the first indication information through the first beam group; and
receiving, by the second communication apparatus, an uplink signal from a first communication apparatus based on the first time division duplex frame structure, wherein the first communication apparatus is located in a coverage area of the first beam group.

9. The method according to claim 8, wherein the first time division duplex frame structure is one of a plurality of time division duplex frame structures, each time division duplex frame structure in the plurality of time division duplex frame structures corresponds to one TA change subinterval of the second communication apparatus, and a TA change subinterval corresponding to the first time division duplex frame structure comprises the first TA change range.

10. The method according to claim 9, wherein an uplink-downlink resource configuration periodicity of the first time division duplex frame structure is determined based on a minimum TA in the first TA change subinterval, and a size of a first uplink-downlink resource guard band in the first time division duplex frame structure is determined based on a difference between a maximum TA and the minimum TA in the first TA change subinterval.

11. The method according to claim 9 or 10, wherein when a maximum TA corresponding to at least one newly added second beam in the first beam group increases with respect to the maximum TA in the TA change subinterval corresponding to the first time division duplex frame structure, the second communication apparatus sends second indication information through the first beam group, wherein the second indication information indicates a second uplink-downlink resource guard band in the first time division duplex frame structure, and a size of the second uplink-downlink resource guard band is determined based on an increment of the maximum TA.

12. The method according to claim 11, wherein the second uplink-downlink resource guard band comprises one or more uplink time domain units that are adjacent to the first uplink-downlink resource guard band and that are in each uplink-downlink resource configuration periodicity of the first time division duplex frame structure, and duration of the one or more uplink time domain units is greater than or equal to the increment of the maximum TA;
the second uplink-downlink resource guard band comprises one or more downlink time domain units that are adjacent to the first uplink-downlink resource guard band and that are in each uplink-downlink resource configuration periodicity of the first time division duplex frame structure, wherein duration of the one or more downlink time domain units is greater than or equal to the increment of the maximum TA; or
the second uplink-downlink resource guard band comprises one or more uplink time domain units and one or more downlink time domain units that are adjacent to the first uplink-downlink resource guard band and that are in each uplink-downlink resource configuration periodicity of the first time division duplex frame structure, wherein total duration of the one or more uplink time domain units and the one or more downlink time domain units is greater than or equal to the increment of the maximum TA.

13. The method according to any one of claims 8 to 12, wherein the first indication information is an index, and the index corresponds to the first time division duplex frame structure.

14. The method according to any one of claims 8 to 13, wherein the method further comprises:
sending, by the second communication apparatus, third indication information through a second beam group scheduled in a second scheduling time period, wherein the third indication information indicates a second time division duplex frame structure of the second beam group, the second beam group comprises at least one third beam, and the second time division duplex frame structure corresponds to a second TA change range of the second beam group.

15. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 7 or the method according to any one of claims 8 to 14 by using a logic circuit or by executing instructions.

## Patentansprüche

1. Kommunikationsverfahren, umfassend:
Empfangen, durch eine erste Kommunikationsvorrichtung, erster Angabeinformationen von einer zweiten Kommunikationsvorrichtung, wobei die ersten Angabeinformationen eine erste Time-Division-Duplex-Rahmenstruktur einer ersten Strahlgruppe, die durch die zweite Kommunikationsvorrichtung in einem ersten Planungszeitraum geplant ist, angeben, die erste Strahlgruppe mindestens einen ersten Strahl umfasst, die erste Time-Division-Duplex-Rahmenstruktur einem ersten Zeitvorlauf-Änderungsbereich, TA-Änderungsbereich, der ersten Strahlgruppe entspricht und sich die erste Kommunikationsvorrichtung in einem Abdeckungsgebiet der ersten Strahlgruppe befindet; und
Senden, durch die erste Kommunikationsvorrichtung, eines Uplink-Signals an die zweite Kommunikationsvorrichtung basierend auf der ersten Time-Division-Duplex-Rahmenstruktur.

2. Verfahren nach Anspruch 1, wobei die erste Time-Division-Duplex-Rahmenstruktur eine aus einer Vielzahl von Time-Division-Duplex-Rahmenstrukturen ist, jede Time-Division-Duplex-Rahmenstruktur in der Vielzahl von Time-Division-Duplex-Rahmenstrukturen einem TA-Änderungsteilintervall der zweiten Kommunikationsvorrichtung entspricht und ein TA-Änderungsteilintervall, das der ersten Time-Division-Duplex-Rahmenstruktur entspricht, den ersten TA-Änderungsbereich umfasst.

3. Verfahren nach Anspruch 2, wobei eine Uplink-Downlink-Ressourcenkonfigurationsperiodizität der ersten Time-Division-Duplex-Rahmenstruktur basierend auf einem minimalen TA in dem ersten TA-Änderungsteilintervall bestimmt wird und eine Größe eines ersten Uplink-Downlink-Ressourcenschutzbandes in der ersten Time-Division-Duplex-Rahmenstruktur basierend auf einer Differenz zwischen einem maximalen TA und dem minimalen TA in dem ersten TA-Änderungsteilintervall bestimmt wird.

4. Verfahren nach Anspruch 2 oder 3, wobei das Verfahren ferner Folgendes umfasst:
Empfangen, durch die erste Kommunikationsvorrichtung, zweiter Angabeinformationen von der zweiten Kommunikationsvorrichtung, wobei die zweiten Angabeinformationen ein zweites Uplink-Downlink-Ressourcenschutzband in der ersten Time-Division-Duplex-Rahmenstruktur angeben und eine Größe des zweiten Uplink-Downlink-Ressourcenschutzbandes basierend auf einer Erhöhung eines maximalen TA, der mindestens einem neu hinzugefügten zweiten Strahl in der ersten Strahlgruppe entspricht, in Bezug auf den maximalen TA in dem TA-Änderungsteilintervall, das der ersten Time-Division-Duplex-Rahmenstruktur entspricht, bestimmt wird.

5. Verfahren nach Anspruch 4, wobei das zweite Uplink-Downlink-Ressourcenschutzband eine oder mehrere Uplink-Zeitdomäneneinheiten, die an das erste Uplink-Downlink-Ressourcenschutzband angrenzen und die sich in jeder Uplink-Downlink-Ressourcenkonfigurationsperiodizität der ersten Time-Division-Duplex-Rahmenstruktur befinden, umfasst und eine Dauer der einen oder der mehreren Uplink-Zeitdomäneneinheiten größer oder gleich der Erhöhung des maximalen TA ist;
das zweite Uplink-Downlink-Ressourcenschutzband eine oder mehrere Downlink-Zeitdomäneneinheiten, die an das erste Uplink-Downlink-Ressourcenschutzband angrenzen und die sich in jeder Uplink-Downlink-Ressourcenkonfigurationsperiodizität der ersten Time-Division-Duplex-Rahmenstruktur befinden, umfasst, wobei eine Dauer der einen oder der mehreren Downlink-Zeitdomäneneinheiten größer oder gleich der Erhöhung des maximalen TA ist; oder
das zweite Uplink-Downlink-Ressourcenschutzband eine oder mehrere Uplink-Zeitdomäneneinheiten und eine oder mehrere Downlink-Zeitdomäneneinheiten, die an das erste Uplink-Downlink-Ressourcenschutzband angrenzen und die sich in jeder Uplink-Downlink-Ressourcenkonfigurationsperiodizität der ersten Time-Division-Duplex-Rahmenstruktur befinden, umfasst, wobei eine Gesamtdauer der einen oder der mehreren Uplink-Zeitdomäneneinheiten und der einen oder der mehreren Downlink-Zeitdomäneneinheiten größer oder gleich der Erhöhung des maximalen TA ist.

6. Verfahren nach einem der Ansprüche 1 bis 5, wobei die ersten Angabeinformationen ein Index sind und der Index der ersten Time-Division-Duplex-Rahmenstruktur entspricht.

7. Verfahren nach einem der Ansprüche 1 bis 6, wobei das Verfahren ferner Folgendes umfasst:
Empfangen, durch die erste Kommunikationsvorrichtung, dritter Angabeinformationen von der zweiten Kommunikationsvorrichtung, wobei die dritten Angabeinformationen eine zweite Time-Division-Duplex-Rahmenstruktur einer zweiten Strahlgruppe, die durch die zweite Kommunikationsvorrichtung in einem zweiten Planungszeitraum geplant ist, angeben, die zweite Strahlgruppe mindestens einen dritten Strahl umfasst, die zweite Time-Division-Duplex-Rahmenstruktur einem zweiten TA-Änderungsbereich der zweiten Strahlgruppe entspricht und die erste Kommunikationsvorrichtung sich in einem Abdeckungsgebiet der zweiten Strahlgruppe befindet.

8. Kommunikationsverfahren, umfassend:
Bestimmen, durch eine zweite Kommunikationsvorrichtung, erster Angabeinformationen, wobei die ersten Angabeinformationen eine erste Time-Division-Duplex-Rahmenstruktur einer ersten Strahlgruppe, die durch die zweite Kommunikationsvorrichtung in einem ersten Planungszeitraum geplant ist, angeben, die erste Strahlgruppe mindestens einen ersten Strahl umfasst und die erste Time-Division-Duplex-Rahmenstruktur einem ersten Zeitvorlauf-Änderungsbereich, TA-Änderungsbereich, der ersten Strahlgruppe entspricht;
Senden, durch die zweite Kommunikationsvorrichtung, der ersten Angabeinformationen durch die erste Strahlgruppe; und
Empfangen, durch die zweite Kommunikationsvorrichtung, eines Uplink-Signals von einer ersten Kommunikationsvorrichtung basierend auf der ersten Time-Division-Duplex-Rahmenstruktur, wobei sich die erste Kommunikationsvorrichtung in einem Abdeckungsgebiet der ersten Strahlgruppe befindet.

9. Verfahren nach Anspruch 8, wobei die erste Time-Division-Duplex-Rahmenstruktur eine aus einer Vielzahl von Time-Division-Duplex-Rahmenstrukturen ist, jede Time-Division-Duplex-Rahmenstruktur in der Vielzahl von Time-Division-Duplex-Rahmenstrukturen einem TA-Änderungsteilintervall der zweiten Kommunikationsvorrichtung entspricht und ein TA-Änderungsteilintervall, das der ersten Time-Division-Duplex-Rahmenstruktur entspricht, den ersten TA-Änderungsbereich umfasst.

10. Verfahren nach Anspruch 9, wobei eine Uplink-Downlink-Ressourcenkonfigurationsperiodizität der ersten Time-Division-Duplex-Rahmenstruktur basierend auf einem minimalen TA in dem ersten TA-Änderungsteilintervall bestimmt wird und eine Größe eines ersten Uplink-Downlink-Ressourcenschutzbandes in der ersten Time-Division-Duplex-Rahmenstruktur basierend auf einer Differenz zwischen einem maximalen TA und dem minimalen TA in dem ersten TA-Änderungsteilintervall bestimmt wird.

11. Verfahren nach Anspruch 9 oder 10, wobei, wenn ein maximaler TA, der mindestens einem neu hinzugefügten zweiten Strahl in der ersten Strahlgruppe entspricht, in Bezug auf den maximalen TA in dem TA-Änderungsteilintervall, das der ersten Time-Division-Duplex-Rahmenstruktur entspricht, steigt, die zweite Kommunikationsvorrichtung zweite Angabeinformationen durch die erste Strahlgruppe sendet, wobei die zweiten Angabeinformationen ein zweites Uplink-Downlink-Ressourcenschutzband in der ersten Time-Division-Duplex-Rahmenstruktur angeben und eine Größe des zweiten Uplink-Downlink-Ressourcenschutzbandes basierend auf einer Erhöhung des maximalen TA bestimmt wird.

12. Verfahren nach Anspruch 11, wobei das zweite Uplink-Downlink-Ressourcenschutzband eine oder mehrere Uplink-Zeitdomäneneinheiten, die an das erste Uplink-Downlink-Ressourcenschutzband angrenzen und die sich in jeder Uplink-Downlink-Ressourcenkonfigurationsperiodizität der ersten Time-Division-Duplex-Rahmenstruktur befinden, umfasst und eine Dauer der einen oder der mehreren Uplink-Zeitdomäneneinheiten größer oder gleich der Erhöhung des maximalen TA ist;
das zweite Uplink-Downlink-Ressourcenschutzband eine oder mehrere Downlink-Zeitdomäneneinheiten, die an das erste Uplink-Downlink-Ressourcenschutzband angrenzen und die sich in jeder Uplink-Downlink-Ressourcenkonfigurationsperiodizität der ersten Time-Division-Duplex-Rahmenstruktur befinden, umfasst, wobei eine Dauer der einen oder der mehreren Downlink-Zeitdomäneneinheiten größer oder gleich der Erhöhung des maximalen TA ist; oder
das zweite Uplink-Downlink-Ressourcenschutzband eine oder mehrere Uplink-Zeitdomäneneinheiten und eine oder mehrere Downlink-Zeitdomäneneinheiten, die an das erste Uplink-Downlink-Ressourcenschutzband angrenzen und die sich in jeder Uplink-Downlink-Ressourcenkonfigurationsperiodizität der ersten Time-Division-Duplex-Rahmenstruktur befinden, umfasst, wobei eine Gesamtdauer der einen oder der mehreren Uplink-Zeitdomäneneinheiten und der einen oder der mehreren Downlink-Zeitdomäneneinheiten größer oder gleich der Erhöhung des maximalen TA ist.

13. Verfahren nach einem der Ansprüche 8 bis 12, wobei die ersten Angabeinformationen ein Index sind und der Index der ersten Time-Division-Duplex-Rahmenstruktur entspricht.

14. Verfahren nach einem der Ansprüche 8 bis 13, wobei das Verfahren ferner Folgendes umfasst:
Senden, durch die zweite Kommunikationsvorrichtung, dritter Angabeinformationen über eine zweite Strahlgruppe, die in einem zweiten Planungszeitraum geplant ist, wobei die dritten Angabeinformationen eine zweite Time-Division-Duplex-Rahmenstruktur der zweiten Strahlgruppe angeben, die zweite Strahlgruppe mindestens einen dritten Strahl umfasst und die zweite Time-Division-Duplex-Rahmenstruktur einem zweiten TA-Änderungsbereich der zweiten Strahlgruppe entspricht.

15. Kommunikationsvorrichtung, umfassend einen Prozessor und eine Schnittstellenschaltung, wobei die Schnittstellenschaltung dazu konfiguriert ist, ein Signal von einer anderen Kommunikationsvorrichtung als der Kommunikationsvorrichtung zu empfangen und das Signal an den Prozessor zu übertragen oder ein Signal von dem Prozessor an eine andere Kommunikationsvorrichtung als die Kommunikationsvorrichtung zu senden, und der Prozessor dazu konfiguriert ist, das Verfahren nach einem der Ansprüche 1 bis 7 oder das Verfahren nach einem der Ansprüche 8 bis 14 unter Verwendung einer Logikschaltung oder durch Ausführen von Anweisungen umzusetzen.

## Revendications

1. Procédé de communication, comprenant :
la réception, par un premier appareil de communication, de premières informations d'indication provenant d'un second appareil de communication, dans lequel les premières informations d'indication indiquent une première structure de trame en duplexage par répartition dans le temps d'un premier groupe de faisceaux ordonnancé par le second appareil de communication au cours d'une première période d'ordonnancement, le premier groupe de faisceaux comprend au moins un premier faisceau, la première structure de trame en duplexage par répartition dans le temps correspond à une première plage de changement d'avance temporelle, TA, du premier groupe de faisceaux, et le premier appareil de communication est situé dans une zone de couverture du premier groupe de faisceaux ; et
l'envoi, par le premier appareil de communication, d'un signal de liaison montante au second appareil de communication sur la base de la première structure de trame en duplexage par à répartition dans le temps.

2. Procédé selon la revendication 1, dans lequel la première structure de trame en duplexage par répartition dans le temps est l'une d'une pluralité de structures de trame en duplexage par répartition dans le temps, chaque structure de trame en duplexage par répartition dans le temps de la pluralité de structures de trame en duplexage par répartition dans le temps correspond à un sous-intervalle de changement de TA du second appareil de communication, et un sous-intervalle de changement de TA correspondant à la première structure de trame en duplexage par répartition dans le temps comprend la première plage de changement de TA.

3. Procédé selon la revendication 2, dans lequel une périodicité de configuration des ressources de liaison montante et descendante de la première structure de trame en duplexage par répartition dans le temps est déterminée sur la base d'une TA minimale dans le premier sous-intervalle de changement de TA, et une taille d'une première bande de garde de ressources de liaison montante et descendante dans la première structure de trame en duplexage par répartition dans le temps est déterminée sur la base d'une différence entre une TA maximale et la TA minimale dans le premier sous-intervalle de changement de TA.

4. Procédé selon la revendication 2 ou 3, dans lequel le procédé comprend en outre :
la réception, par le premier appareil de communication, de deuxièmes informations d'indication provenant du second appareil de communication, dans lequel les deuxièmes informations d'indication indiquent une seconde bande de garde de ressources de liaison montante et descendante dans la première structure de trame en duplexage par répartition dans le temps, et une taille de la seconde bande de garde de ressources de liaison montante et descendante est déterminée sur la base d'un incrément d'une TA maximale correspondant à au moins un deuxième faisceau nouvellement ajouté dans le premier groupe de faisceaux par rapport à la TA maximale dans le sous-intervalle de changement de TA correspondant à la première structure de trame en duplexage par répartition dans le temps.

5. Procédé selon la revendication 4, dans lequel la seconde bande de garde de ressources de liaison montante et descendante comprend une ou plusieurs unités de domaine temporel de liaison montante qui sont adjacentes à la première bande de garde de ressources de liaison montante et descendante et qui se trouvent dans chaque périodicité de configuration des ressources de liaison montante et descendante de la première structure de trame en duplexage par répartition dans le temps, et la durée des une ou plusieurs unités de domaine temporel de liaison montante est supérieure ou égale à l'incrément de la TA maximale ;
la seconde bande de garde de ressources de liaison montante et descendante comprend une ou plusieurs unités de domaine temporel de liaison descendante qui sont adjacentes à la première bande de garde de ressources de liaison montante et descendante et qui se trouvent dans chaque périodicité de configuration des ressources de liaison montante et descendante de la première structure de trame en duplexage par répartition dans le temps, dans lequel la durée des une ou plusieurs unités de domaine temporel de liaison descendante est supérieure ou égale à l'incrément de la TA maximale ; ou
la seconde bande de garde de ressources de liaison montante et descendante comprend une ou plusieurs unités de domaine temporel de liaison montante et une ou plusieurs unités de domaine temporel de liaison descendante qui sont adjacentes à la première bande de garde de ressources de liaison montante et descendante et qui se trouvent dans chaque périodicité de configuration des ressources de liaison montante et descendante de la première structure de trame en duplexage par répartition dans le temps, dans lequel la durée totale des une ou plusieurs unités de domaine temporel de liaison montante et des une ou plusieurs unités de domaine temporel de liaison descendante est supérieure ou égale à l'incrément de la TA maximale.

6. Procédé selon l'une quelconque des revendications 1 à 5, dans lequel les premières informations d'indication sont un indice, et l'indice correspond à la première structure de trame en duplexage par répartition dans le temps.

7. Procédé selon l'une quelconque des revendications 1 à 6, dans lequel le procédé comprend en outre :
la réception, par le premier appareil de communication, de troisièmes informations d'indication provenant du second appareil de communication, dans lequel les troisièmes informations d'indication indiquent une seconde structure de trame en duplexage par répartition dans le temps d'un second groupe de faisceaux ordonnancé par le second appareil de communication au cours d'une seconde période d'ordonnancement, le second groupe de faisceaux comprend au moins un troisième faisceau, la seconde structure de trame en duplexage par répartition dans le temps correspond à une seconde plage de changement de TA du second groupe de faisceaux, et le premier appareil de communication est situé dans une zone de couverture du second groupe de faisceaux.

8. Procédé de communication, comprenant :
la détermination, par un second appareil de communication, de premières informations d'indication, dans lequel les premières informations d'indication indiquent une première structure de trame en duplexage par répartition dans le temps d'un premier groupe de faisceaux ordonnancé par le second appareil de communication au cours d'une première période d'ordonnancement, le premier groupe de faisceaux comprend au moins un premier faisceau, et la première structure de trame en duplexage par répartition dans le temps correspond à une première plage de changement d'avance temporelle, TA, du premier groupe de faisceaux ;
l'envoi, par le second appareil de communication, des premières informations d'indication à travers le premier groupe de faisceaux ; et
la réception, par le second appareil de communication, d'un signal de liaison montante provenant d'un premier appareil de communication sur la base de la première structure de trame en duplexage par répartition dans le temps, dans lequel le premier appareil de communication est situé dans une zone de couverture du premier groupe de faisceaux.

9. Procédé selon la revendication 8, dans lequel la première structure de trame en duplexage par répartition dans le temps est l'une d'une pluralité de structures de trame en duplexage par répartition dans le temps, chaque structure de trame en duplexage par répartition dans le temps de la pluralité de structures de trame en duplexage par répartition dans le temps correspond à un sous-intervalle de changement de TA du second appareil de communication, et un sous-intervalle de changement de TA correspondant à la première structure de trame en duplexage par répartition dans le temps comprend la première plage de changement de TA.

10. Procédé selon la revendication 9, dans lequel une périodicité de configuration des ressources de liaison montante et descendante de la première structure de trame en duplexage par répartition dans le temps est déterminée sur la base d'une TA minimale dans le premier sous-intervalle de changement de TA, et une taille d'une première bande de garde de ressources de liaison montante et descendante dans la première structure de trame en duplexage par répartition dans le temps est déterminée sur la base d'une différence entre une TA maximale et la TA minimale dans le premier sous-intervalle de changement de TA.

11. Procédé selon la revendication 9 ou 10, dans lequel lorsqu'une TA maximale correspondant à au moins un deuxième faisceau nouvellement ajouté dans le premier groupe de faisceaux augmente par rapport à la TA maximale dans le sous-intervalle de changement de TA correspondant à la première structure de trame en duplexage par répartition dans le temps, le second appareil de communication envoie de deuxièmes informations d'indication à travers le premier groupe de faisceaux, dans lequel les deuxièmes informations d'indication indiquent une seconde bande de garde de ressources de liaison montante et descendante dans la première structure de trame en duplexage par répartition dans le temps, et une taille de la seconde bande de garde de ressources de liaison montante et descendante est déterminée sur la base d'un incrément de la TA maximale.

12. Procédé selon la revendication 11, dans lequel la seconde bande de garde de ressources de liaison montante et descendante comprend une ou plusieurs unités de domaine temporel de liaison montante qui sont adjacentes à la première bande de garde de ressources de liaison montante et descendante et qui se trouvent dans chaque périodicité de configuration des ressources de liaison montante et descendante de la première structure de trame en duplexage par répartition dans le temps, et la durée des une ou plusieurs unités de domaine temporel de liaison montante est supérieure ou égale à l'incrément de la TA maximale ;
la seconde bande de garde de ressources de liaison montante et descendante comprend une ou plusieurs unités de domaine temporel de liaison descendante qui sont adjacentes à la première bande de garde de ressources de liaison montante et descendante et qui se trouvent dans chaque périodicité de configuration des ressources de liaison montante et descendante de la première structure de trame en duplexage par répartition dans le temps, dans lequel la durée des une ou plusieurs unités de domaine temporel de liaison descendante est supérieure ou égale à l'incrément de la TA maximale ; ou
la seconde bande de garde de ressources de liaison montante et descendante comprend une ou plusieurs unités de domaine temporel de liaison montante et une ou plusieurs unités de domaine temporel de liaison descendante qui sont adjacentes à la première bande de garde de ressources de liaison montante et descendante et qui se trouvent dans chaque périodicité de configuration des ressources de liaison montante et descendante de la première structure de trame en duplexage par répartition dans le temps, dans lequel la durée totale des une ou plusieurs unités de domaine temporel de liaison montante et des une ou plusieurs unités de domaine temporel de liaison descendante est supérieure ou égale à l'incrément de la TA maximale.

13. Procédé selon l'une quelconque des revendications 8 à 12, dans lequel les premières informations d'indication sont un indice, et l'indice correspond à la première structure de trame en duplexage par répartition dans le temps.

14. Procédé selon l'une quelconque des revendications 8 à 13, dans lequel le procédé comprend en outre :
l'envoi, par le second appareil de communication, de troisièmes informations d'indication à travers un second groupe de faisceaux ordonnancé au cours d'une seconde période d'ordonnancement, dans lequel les troisièmes informations d'indication indiquent une seconde structure de trame en duplexage par répartition dans le temps du second groupe de faisceaux, le second groupe de faisceaux comprend au moins un troisième faisceau, et la seconde structure de trame en duplexage par répartition dans le temps correspond à une seconde plage de changement de TA du second groupe de faisceaux.

15. Appareil de communication, comprenant un processeur et un circuit d'interface, dans lequel le circuit d'interface est configuré pour recevoir un signal provenant d'un appareil de communication autre que l'appareil de communication et transmettre le signal au processeur, ou pour envoyer un signal du processeur à un appareil de communication autre que l'appareil de communication, et le processeur est configuré pour mettre en œuvre le procédé selon l'une quelconque des revendications 1 à 7 ou le procédé selon l'une quelconque des revendications 8 à 14 en utilisant un circuit logique ou en exécutant des instructions.
